# EUROPEAN PATENT APPLICATION

(11) **EP 2 353 380 A1**
(43) Date of publication of application: **10.08.2011**
(21) Application number: 11152941.8
(22) Date of filing: 01.02.2011
(51) Int. Cl.: A01K 95/02, A01K 91/03

(54) **Fishing rig clip**

(30) Priority: 01.02.2010 GB 1001553
(71) Applicant: Preston Innovations Limited, Telford, Shropshire TF3 3BD (GB)
(72) Inventor: PRESTON, David, Telford, Shropshire TF3 3BD (GB)
(74) Representative: Newell, William Joseph

(57) **Abstract**

A safety lead clip arrangement comprises an openable loop or link (126, 226) which is openable to receive and link the loops in a main fishing line (116, 216) and a hook link line (110, 210). The link (126, 226) can be pushed into a flat rectangular passage (119, 219) in a lead clip (118, 218).

## Description

This invention relates to a new design of clip used in modern fishing rigs.

Increasingly, anglers use clips to attach sinking objects, most commonly referred to as leads, to a fishing rig. The term 'lead' is used herein to describe any object applied for the purposes of increasing the weight of the line. A fishing rig generally consists of a short length of line to which the baited hook is attached (referred to as the hook length line), and typically a metal swivel to link the hook length line to the main fishing line that comes from the rod and reel. These clips are normally referred to as lead clips or, where provision is made to eject the lead, safety lead clips.

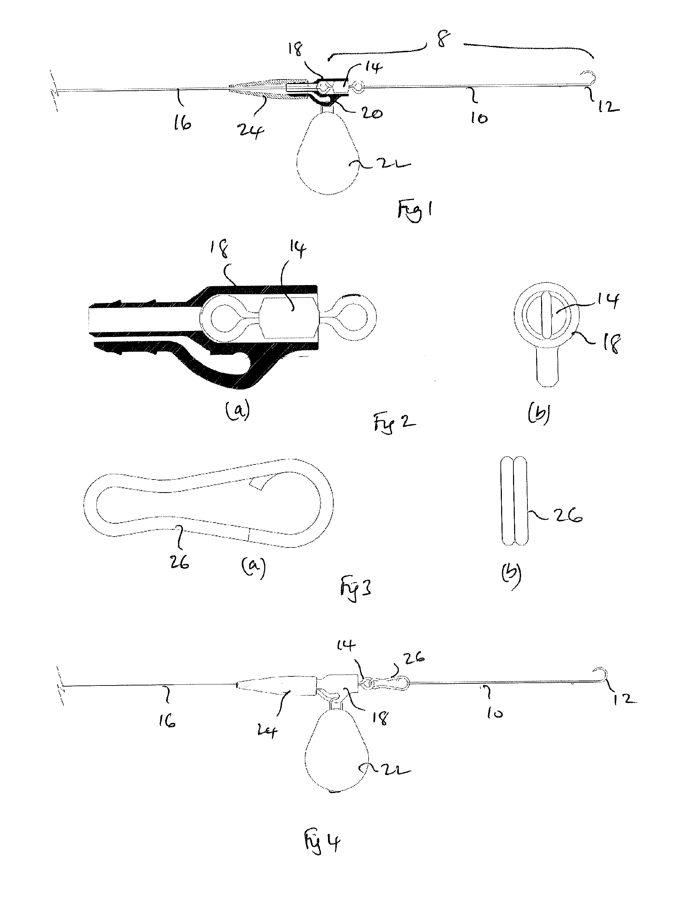

Figures 1 to 3 of the accompanying drawings illustrate the typical set up of a conventional safety lead clip. In these drawings, the fishing rig 8 comprises a hook length line 10 to which the hook 12 is attached at one end and the other end is tied to one end of a metal swivel 14. To the other end of the swivel is tied the main fishing line 16. The safety lead clip 18 is a one piece moulded hard plastics component having a cylindrical part which fits over the swivel, and a hook part 20, onto which a lead 22 or other sinking object can be hung.

The most common design of lead clip incorporates an in-built safety feature, enabling the lead 22 to be ejected from the rig 8, when under a sufficient level of force. This force can be caused by either the lead 22 snagging on an underwater obstruction, or by the pull of a large fish being hooked by the fishing rig 8.

The above safety feature is commonly achieved by pushing a soft cone shaped sleeve 24, referred to as the lead clip sleeve or tail rubber, that has the main fishing line 16 threaded through it, onto the hard plastic safety lead clip 18 and over the tip of the hook 20 to which the lead 22 is attached. When the tail rubber 24 is pushed on to the lead clip it closes the hook feature of the clip, therefore locking the lead in place, until sufficient force is placed upon the lead to push the tail rubber off the hook shape, so ejecting the lead from the rig.

Generally, safety lead clips are designed to fit around a standard design barrel shaped swivel 14, that the hook length line and reel line are tied on to. Due to the barrel shape of swivels, safety lead clips are usually round in profile shape when viewed from the end, in order to accommodate a swivel inside, as seen in Figure 2(b).

As seen in Figures 3 and 4, when making fishing rigs, anglers often fit a wire quick-change link 26 to the end of the hook length line 10, which can then be attached to the barrel shaped swivel 14. By using this quick-change link arrangement the hook length line 10 can be changed very quickly, without the need of cutting the line and re-tying knots.

Items of terminal fishing tackle such as safety lead clips are generally desired to be as compact as possible, and there is a demand for a safety lead clip that has a smaller profile shape, in order to make it as compact as possible.

There is also a need to reduce component count and to reduce or avoid snagging that can occur due to the exposed interlocking regions of the quick change link 26 and the barrel-shaped swivels 14.

The illustrated embodiments seek to provide a more compact design of safety lead clip, that will accommodate a quick-change link or other openable link member, enabling the hook length line to be changed very quickly and easily and in which the connecting link member is at least partially surrounded in the clip.

Accordingly, one aspect of the invention provides a lead clip arrangement for being connected in use between a fishing line and a hook length line, the fishing line and/or the hook length line having a closed loop (e.g. by tying), the lead clip arrangement including:
a lead clip having opposed open ends and a passage extending between the two, and
a link member generally of closed loop form but configured in use to be openable to allow a closed loop of a line to be interlockingly coupled to said link member,
wherein said passage is adapted at least partially to receive a portion of said link member.

It will be noted that, in this arrangement, a hook length line can be quickly changed by opening the link member to release a hook length line and to allow a replacement to be coupled, and that the link member is partially received in the lead clip thereby reducing the risk of snagging.

The link member may take a wide variety of forms of any suitable loop shape. For example, said link may be a loop of split ring form, or it could comprise a loop of resilient material having one end region movable between a closed position in which access to and from the ring is prevented or restricted, and an open position in which access is provided through a gap in the ring. Still further, it could comprise a Karabiner design.

Said link member is of preferably oblate shape. In a particularly preferred arrangement, the passage in said lead clip is of stepped cross-section with a length thereof of narrower width than the remainder. Preferably the link member too is of stepped overall shape, comprising a region of narrower width adapted to slideably engage a narrower width passage portion of the link member, and a wider region to be received in a wider passage portion of the link member.

Conveniently the lead clip arrangement includes a clip arm integrally formed on said clip and extending alongside the clip to define a slot, and a sleeve for being passed in use over the clip and the arm to close said slot.

In one embodiment said link member comprises a coil of wire with an overlap of less than one half the circumference of the loop. The term 'coil' is used broadly to cover any lapped circuit of material and includes both circular and non-circular shapes.

Advantageously, the passage in the lead clip receives a non-overlapped portion of the coil. Conveniently, the passage receiving said part of said link member is of flat rectangular cross-section.

Whilst the invention has been described above, it extends to any inventive combination or sub-combination of novel features disclosed herein.

The invention may be performed in various ways and, by way of example only, two embodiments thereof will now be described in detail, reference being made to the accompanying drawings in which:
Figures 1 to 4 are cross-section views showing a prior art arrangement and modifications thereto;
Figure 5 is a cross-section view through a first embodiment of lead clip in accordance with this invention, and
Figure 6 is a cross-section view through a second embodiment of lead clip in accordance with this invention.

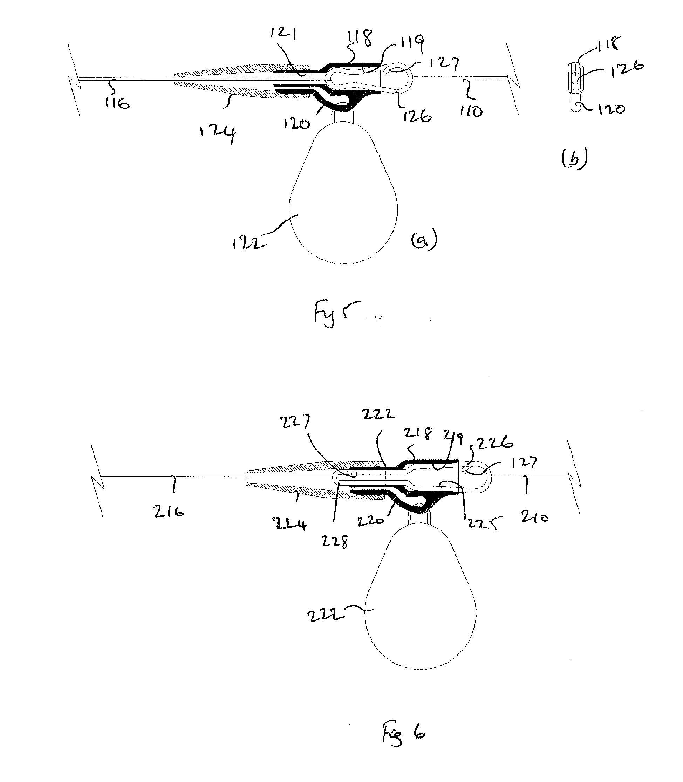

In the embodiments of Figures 5 and 6, a lead clip arrangement is provided in which an openable loop or link is provided which passes through a loop in the hook length line and a loop in the main fishing line to couple the two together. The openable loop itself is slideably received within a lead clip body and has a releasable safety clip to secure a lead or other sinking object.

Referring initially to Figure 5, in this arrangement, the hook length line 110 and the main fishing line 116 terminate in respective closed loops which are coupled by a quick change link 126. The quick change link 126 is similar in form to that shown on an enlarged scale in Figures 3(a) and (b). It consists of a coiled wire comprising a single turn along most of its length but two overlapping partial turns at its right hand end as viewed in Figure 3(a). An end 127 of the coil projects inwardly to provide a lead-in to allow the loops on the end of the main fishing line 116 and the hook length line 110 to be coupled to the link 126. The lead clip 118 is of hard plastics material and, at the right hand end as viewed in Figure 5(a), has a slim flat rectangular passage 119 into which the single turn portion of the quick change link 126 can be slid. The passage 119 is dimensioned relative to quick change link 126 so that the link 126 is a close fit, and a diverging portion of the link 126 releasably wedges into the passage 119. The passage 119 leads to an outlet sleeve 121 through which the main line 116 passes. As in the known arrangement, a lead 122 may be hooked onto the arm 120 and releasably retained there by means of a soft rubber cone-shaped sleeve 124. As can be seen from a comparison of Figure 5(b) with Figure 2(b), by featuring a slot shaped front passage 119 designed to accommodate the flat shaped quick change link 126, in place of the normal round profile barrel-shaped swivel component, the design of the lead clip 118 is also generally flat in profile and therefore more compact than the standard design safety lead clip. Moreover, this results in a reduction in component count which improves assembly both during manufacture and during actual use by the angler.

Referring now to the second embodiment shown in Figure 6, this is generally similar to that of Figure 5 except that the quick change link 226 is of stepped form having a narrow width, generally parallel sided portion 227 merging with a wider outwardly tapering portion 225. In this arrangement, the thinner width portion extends beyond the outlet tube 222 to leave a part 228 exposed.

The embodiment of Figure 6 has some additional benefits over that of Figure 5. Both ends of the link member protrude from opposite ends of the clip 218. This means that, if required, the main fishing line 216 could be threaded through the exposed part of the link 228 (left hand as seen in Figure 6) and tied if required, and likewise the hook length line. Furthermore, the extended contact between the link and the clip due to the clip extending from one end of the body to the other provides an improved retention force.

This design of assembly would enable both the hook length line and the main line, to be removed from, and re-fitted on to, the safety lead clip assembly, without needing to dismantle the lead clip assembly, and without needing to cut, or tie new knots on, either the hook length or main fishing line.

## Claims

1. A lead clip arrangement for being connected in use between a fishing line (116, 216) and a hook length line (110, 210), the fishing line and/or the hook length line having a closed loop, the lead clip arrangement including:
a lead clip (118, 218) having opposed open ends and a passage (119, 219) extending between the two, and
a link member (116, 216) generally of closed loop form but configured in use to be openable to allow a closed loop of line to be interlockingly coupled to said link member,
wherein said passage (219) is adapted at least partially to receive a portion of said link member.

2. A lead clip arrangement according to Claim 1, wherein said link (126, 226) member is of split ring form.

3. A lead clip arrangement according to Claim 1, wherein said link member (126, 226) comprises a loop of resilient material having one end region movable between a closed position in which access to and from the ring is prevented, and an open position in which access is provided through a gap in the ring.

4. A lead clip arrangement according to any preceding Claim, wherein said link member (126, 216) of oblate shape.

5. A lead clip arrangement according to any previous Claim, wherein the passage in said lead clip is of stepped cross-section with a length thereof of narrower width than the remainder.

6. A lead clip arrangement according to Claim 5, wherein the link member (226) is correspondingly profiled, comprising a region (227) of narrower width adapted to slideably engage the narrower width portion (227) of the link member.

7. A lead clip arrangement according to any preceding Claim, including a clip arm (120, 220) integrally formed on said clip (118, 218) and extending alongside the clip to define a slot, and a sleeve (124) for being passed over the clip and the arm to close said slot.

8. A lead clip arrangement according to any preceding Claim, wherein said link member (226) comprises a loop of wire with an overlap of less than one half the circumference of the loop.

9. A lead clip arrangement according to Claim 8, wherein the passage (119, 219) in the lead clip (118, 218) receives a non-overlapped portion of the loop.

10. A lead clip arrangement according to any preceding Claim, wherein the passage (119, 219) receiving said part of said link member is of flat rectangular cross-section.

11. A lead clip arrangement substantially as hereinbefore described with reference to, and as illustrated in, any of the accompanying drawings.
